# EUROPÄISCHE PATENTSCHRIFT

(11) **EP 2 282 922 B1**
(45) Veröffentlichungstag und Bekanntmachung des Hinweises auf die Patenterteilung: **26.12.2018**
(21) Anmeldenummer: 09761410.1
(22) Anmeldetag: 02.06.2009
(51) Int. Cl.: B62D 15/02

(54) **VERFAHREN ZUR UNTERSTÜTZUNG EINES FAHRERS EINES FAHRZEUGS BEIM EINPARKEN IN EINE PARKLÜCKE**
METHOD FOR SUPPORTING A DRIVER OF A VEHICLE WHILE PARKING IN A PARKING SPACE
PROCÉDÉ D'ASSISTANCE AU CONDUCTEUR D'UN VÉHICULE POUR EFFECTUER UN CRÉNEAU DANS UNE PLACE DE STATIONNEMENT

(30) Priorität: 11.06.2008 DE 102008027779
(43) Veröffentlichungstag der Anmeldung: 16.02.2011
(73) Patentinhaber: Valeo Schalter und Sensoren GmbH, 74321 Bietigheim-Bissingen (DE); Volkswagen Aktiengesellschaft, 38440 Wolfsburg (DE)
(72) Erfinder: BARTH, Harald, 70825 Korntal-Muenchingen (DE); JECKER, Nicolas, 73730 Esslingen (DE); HÜGER Philipp, 38448 Wolfsburg (DE); WUTTKE Ulrich, 38126 Braunschweig (DE)
(74) Vertreter: Pothmann, Karsten
(86) Internationale Anmeldenummer: PCT/EP2009/003943
(87) Internationale Veröffentlichungsnummer: WO 2009/149847

(56) Entgegenhaltungen:
- EP-A- 1 602 530
- DE-A1- 4 333 112
- DE-A1-102004 001 428
- DE-A1-102005 046 827
- DE-A1-102007 055 389

## Beschreibung

### Stand der Technik

Die Erfindung betrifft ein Verfahren zur Unterstützung eines Fahrers eines Fahrzeugs beim Einparken in eine Parklücke gemäß dem Oberbegriff des Anspruchs 1.

Bekannte Fahrassistenzvorrichtungen zur Unterstützung eines Fahrers eines Fahrzeugs beim Einparken in eine Parklücke, im Folgenden kurz als Einparksysteme bezeichnet, berechnen zu Beginn bzw. vor Beginn eines Einparkvorgangs eine als Einparktrajektorie bezeichnete Bahn für das Einparken des Fahrzeugs. Diese Bahn wird anhand der Parklückengeometrie und einer Fahrzeugposition relativ zu dieser Parklücke berechnet. Dabei vermisst ein Einparksystem mit einer Vermessungseinrichtung, welche geeignete Sensoren umfasst, beispielsweise vorne und/oder hinten und/oder seitlich am Fahrzeug angebrachte Ultraschallsensoren (Ultrasonic Park Assist Sensoren; UPA-Sensoren), eine mögliche Parklücke, berechnet aus den Parklückendaten bzw. aus der hieraus erhaltenen Parklückengeometrie die Einparktrajektorie und führt anschließend den Einparkvorgang durch, indem es das Fahrzeug beispielsweise durch aktiven Lenkeingriff oder durch Fahranweisungen an den Fahrer entlang der Einparktrajektorie in die Parklücke steuert. Während des Einparkvorgangs bzw. beim Einparken wird die Distanz zu die Parklücke begrenzenden Objekten durch die Sensoren überwacht.

EP1602530A betrifft ein Verfahren zur Unterstützung eines Einparkvorgangs eines Fahrzeugs in eine seitlich zum zu parkenden Fahrzeug angeordnete Parklücke, wobei mittels einer Sensoranordnung des Fahrzeugs die Parklücke während eines Vorbeifahrens des Fahrzeugs an der Parklücke erfasst wird. Zur Bereitstellung einer zuverlässigen Referenz für eine seitliche Parklückenbegrenzung wird vorgeschlagen, dass die Position der dem zu parkenden Fahrzeug abgewandten seitlichen Parklückenbegrenzung und/oder die Orientierung der seitlichen Parklückenbegrenzung bezüglich des zu parkenden Fahrzeugs aus vor dem Erreichen und/oder nach dem Passieren der Parklücke durch das Fahrzeug von der Sensoranordnung erfassten Daten berechnet wird.

DE102005046827A1 offenbart ein Verfahren zur Einparkunterstüzung, bei dem bei einer noch nicht abschließenden, zumindest teilweisen Positionierung des Fahrzeugs in einer Parklücke die Abmessungen der Parklücke bestimmt werden und eine Trajektorie des Fahrzeugs zum Abschluss des Einparkvorgangs bestimmt wird.

DE102004001428A1 betrifft ein Verfahren zur Unterstützung des Fahrers bei Einparkvorgängen für ein Kraftfahrzeug mit den folgenden Schritten: a) Sensorisches Vermessen einer aufgefundenen Parklücke; b) Entscheiden anhand von in Schritt a) ermittelten Vermessungsdaten, ob eine Parklücke für das Kraftfahrzeug zum Einparken geeignet ist; und, um einfacher insbesondere in kleine Parklücken einparken zu können, mit den weiteren Schritten: c) Berechnen einer Startaufstellung mit einem vorbestimmten Bereich für eine optimale Startposition des Fahrzeugs für das Einparken in eine Parklücke; d) Ausgeben der berechneten Startaufstellung des Kraftfahrzeugs mit einer geeigneten Ausgabeeinheit.

DE4333112A1 offenbart ein Verfahren und eine Vorrichtung zum Ausparken eines Fahrzeuges aus einer Parklücke, bei der weder die Größe noch der Abstand zu Hindernissen bekannt ist. Mittels von am Fahrzeug angebrachten Sensoren wird sowohl der Abstand als auch der Lenkwinkel des fahrenden Fahrzeuges erfaßt und kontinuierlich der Abstand zu den umgebenden Hindernissen ermittelt. Aufgrund der Daten wird in einem Rechnermodul eine aktuelle lokale Umgebungskarte angelegt. Die erfaßten Hindernisse werden mittels eines Polygonzuges als Barriere verbunden. Aus diesen Daten wird ein Umgebungsmodell erzeugt, mit dem eine Fahrstrategie zum Ausparken des Fahrzeuges ermittelt wird. Entsprechende Fahrtrichtungszeiger geben dem Fahrer des Fahrzeuges die Fahrtrichtung vor.

Aktuelle Einparksysteme frieren die berechnete Bahn vor bzw. bei Beginn des Einparkvorganges ein. Außerdem weisen aktuell verwendete Vermessungseinrichtungen zur Erfassung der Parklückengeometrie eine Streuung auf, die sich nachteilig auf das Einparkergebnis auswirken kann, d.h. auf die am Ende des Einparkvorgangs erreichte Platzierung des Fahrzeugs in einer Zielposition bzw. in einer Zielorientierung in der Parklücke.

Als eine Aufgabe der Erfindung kann es deshalb angesehen werden, ein Verfahren zur Unterstützung eines Fahrers eines Fahrzeugs beim Einparken in eine Parklücke zu entwickeln, welches unabhängig von der Streuung einer verwendeten Vermessungseinrichtung und unabhängig von einer möglicherweise unzureichend erfassten Parklückengeometrie ein zufrieden stellendes Einparkergebnis ermöglicht.

### Offenbarung der Erfindung

Die Aufgabe wird gelöst durch ein Verfahren zur Unterstützung eines Fahrers eines Fahrzeugs beim Einparken in eine nahezu rechtwinklig zu einer Fahrbahn ausgerichtete Parklücke oder eine Schrägparklücke, bei welchem Verfahren:
- eine mögliche Parklücke vermessen und vorzugsweise gleichzeitig eine Fahrzeugposition relativ zu der Parklücke bestimmt wird,
- eine Einparktrajektorie anhand der aus der Vermessung der Parklücke ermittelten Parklückengeometrie und einer Fahrzeugposition relativ zu der Parklücke berechnet wird, und
- anschließend ein Einparkvorgang durchgeführt wird, während dem das Fahrzeug entlang der Einparktrajektorie in die Parklücke gesteuert wird.

Erfindungsgemäß ist vorgesehen, dass die Parklückengeometrie während des Einparkvorgangs anhand durch eine geeignete Sensorik zur Vermessung der Parklücke gewonnener aktueller Sensordaten weiterhin ermittelt und mit der vor Beginn des Einparkvorgangs ermittelten Parklückengeometrie verglichen wird, wobei der Vergleich der vor und während des Einparkvorgangs ermittelten Parklückengeometrien erfolgt, indem während des Eintauchens in die Parklücke der seitliche Abstand zu die Parklücke begrenzenden Objekten links und rechts des Fahrzeugs erfasst und mit den aufgrund der ursprünglich erfassten Parklückengeometrie und der aktuellen Fahrzeugposition erwarteten Abständen verglichen wird, und wobei, wenn sich die beiden Parklückengeometrien voneinander unterscheiden, eine vorliegende Abweichung bewertet und die Einparktrajektorie gegebenenfalls korrigiert und/oder neu berechnet wird.

Durch die Erfindung können Informationen, die erst während des Einparkvorgangs bzw. dann mit verbesserter Genauigkeit ermittelt werden, nutzbar gemacht werden und somit dazu beitragen, das Parkergebnis insbesondere in schwierigen Situationen zu verbessern und somit letztlich die Nutzbarkeit und Kundenzufriedenheit eines Einparksystems zu steigern.

Das erfindungsgemäße Verfahren weist gegenüber dem Stand der Technik den Vorteil auf, dass es falls während des Einparkvorganges Sensordaten vorliegen, die eine bessere Platzierung der Zielposition/-orientierung des Fahrzeugs in der Parklücke erlauben, eine entsprechende Korrektur der Einparktrajektorie ermöglicht. Das erfindungsgemäße Verfahren schafft damit die Möglichkeit einer Bahnkorrektur während der Einparkphase bzw. eine Korrektur der Einparktrajektorie während des Einparkvorganges anhand aktueller und damit genauerer Sensordaten.

Das Steuern des Fahrzeugs entlang der Einparktrajektorie kann dabei als ein geführtes Einparken oder als ein halbautomatisches Einparken, oder als ein vollautomatisches Einparken erfolgen.

Eine vorteilhafte Ausgestaltung der Erfindung sieht vor, dass, sofern der Unterschied der vor und während des Einparkvorgangs ermittelten Parklückengeometrien gering ist und z. B. in der jeweiligen systembedingten Streuung liegt, die ursprüngliche Parklückengeometrie und damit die vor Beginn des Einparkvorgangs berechnete Einparktrajektorie beibehalten wird, und sofern sich die während des Einparkvorgangs ermittelte Parklückengeometrie signifikant von der ursprünglich ermittelten Parklückengeometrie unterscheidet und dieser Unterschied für das Einparkergebnis relevant ist, die Einparktrajektorie anhand der aktuell während des Einparkvorgangs ermittelten Parklückengeometrie neu festgelegt bzw. korrigiert wird.

Eine andere vorteilhafte Ausgestaltung der Erfindung sieht vor, dass während des Einparkvorgangs bzw. beim Einparken die Distanz zu die Parklücke begrenzenden Objekten z. B. durch eine geeignete Sensorik bzw. durch geeignete Sensoren überwacht wird.

Ebenfalls ist denkbar, dass ein Vergleich der vor und während des Einparkvorgangs ermittelten Parklückengeometrien erfolgt, indem während des Eintauchens in die Parklücke der Verlauf von die Parklücke begrenzenden Objekten links und rechts des Fahrzeugs erfasst wird, wobei wenn sich anhand des Verlaufs erkennen lässt, dass die Parklücke eine von der vor dem Einparkvorgang ermittelten Parklückengeometrie bzw. von der ursprünglichen Festlegung abweichende Orientierung bzw. Parklückengeometrie aufweist, die Einparktrajektorie entsprechend korrigiert wird.

Vorzugsweise wird zur Feststellung der Orientierung der Parklücke der Verlauf beider seitlichen Objekte jeweils als eine Gerade dargestellt. Falls beide Geraden annähernd parallel verlaufen, wird vorzugsweise der Mittelwert beider Geraden als Orientierung der Parklücke angenommen.

Bei einer Abweichung des Verlaufs der gemessenen Geraden von der realen Geraden können während des Einparkvorgangs seitliche Abstandsdaten, beispielsweise mittels seitlich am hinteren Stoßfänger angebrachter Ultraschallsensoren, zur Korrektur der Einparktrajektorie herangezogen werden. Für den Fall einer Parallelverschiebung der Geraden kann mit der Auswertung dieser Ultraschallsensoren eine Korrektur der Einparktrajektorie im wesentlichen durch eine korrespondierende Parallelverschiebung vorgenommen wird. Im Fall eines Richtungsversatzes der Geraden kann dagegen eine Korrektur des Zielwinkels der Einparktrajektorie mit den seitlich am hinteren Stoßfänger angebrachten Ultraschallsensoren vorgenommen werden.

Falls beide Geraden nicht ausreichend parallel verlaufen, aber bezüglich der ursprünglichen Zielorientierung gleich orientiert sind, wird vorzugsweise die Gerade, die am wenigsten von der ursprünglichen Zielorientierung abweicht, als Orientierung der Parklücke angenommen. Falls beide Geraden nicht ausreichend parallel verlaufen und bezüglich der ursprünglichen Zielorientierung ungleich orientiert sind, wird vorzugsweise ein Mittelwert beider Geraden als Orientierung der Parklücke angenommen. Falls beide Geraden nicht ausreichend parallel verlaufen und bezüglich der ursprünglichen Zielorientierung ungleich orientiert sind, wird vorzugsweise die ursprüngliche Zielorientierung beibehalten. Vorteile dieser Ausgestaltungen des erfindungsgemäßen Verfahrens sind, dass dadurch nicht nur in nahezu rechtwinklig zur Fahrbahn ausgerichtete Parklücken eingeparkt werden kann, sondern auch in sogenannte Schrägparklücken.

Eine vorteilhafte Ausgestaltung der Erfindung sieht vor, dass zur Ermittlung der Parklückengeometrie während des Einparkvorgangs eine Vermessungseinrichtung vorgesehen ist, welche primär zur Unterstützung des Fahrers des Fahrzeugs in einer anderen Situation, als während eines Einparkvorgangs vorgesehen ist.

Alternativ kann zur Ermittlung der Parklückengeometrie während des Einparkvorgangs eine Vermessungseinrichtung vorgesehen sein, die eigens zur Unterstützung des Fahrers des Fahrzeugs während eines Einparkvorgangs vorgesehen ist.

Die Vermessungseinrichtung kann im Fahrzeug verbaute Ultraschallsensoren, z. B. zusätzliche seitliche Ultraschallsensoren im hinteren Fahrzeugbereich und/oder eine im Fahrzeug vorhandene Kamera z. B. eine Rückfahrkamera und/oder Radarsensoren, z. B. eine Sensorik zur Überwachung des Totwinkelbereichs, umfassen.

Eine besonders vorteilhafte Ausgestaltung der Erfindung sieht vor, dass zur Ermittlung der Parklückengeometrie vor und/oder während des Einparkvorgangs Parklückenmarkierungen z. B. von einer Rückfahrkamera erfasst und z. B. mittels geeigneter Bildverarbeitung erkannt werden, wobei Lage und Orientierung der Parklückenmarkierungen ermittelt werden. Da diese Parklückenmarkierungen vor Beginn des Einparkvorganges in der Regel im Randbereich eines Kamerabildes liegen, wird eine Ermittlung erst während des Einparkvorgangs sinnvoll, zumindest erhöht sich aber die Genauigkeit der Ermittlung, wenn die Parklückenmarkierung während des Einparkvorgangs in Richtung Bildmitte wandert. Dies gilt insbesondere für widrige Licht und/oder Kontrastverhältnisse.

Eine andere besonders vorteilhafte Ausgestaltung der Erfindung sieht vor, dass zur Ermittlung der Parklückengeometrie vor und/oder während des Einparkvorgangs ein Bordsteinverlauf erfasst und/oder z. B. anhand von Abstandsdaten und/oder visuell z. B. durch eine Kamera ermittelt wird.

Eine weitere besonders vorteilhafte Ausgestaltung der Erfindung sieht vor, dass zusätzlich eine Verifikation und Bestätigung bzw. Korrektur der Zielparkposition und/oder -orientierung in der Parklücke durch den Fahrer vorgesehen ist, beispielsweise mittels einer Darstellung der Parksituation auf einer Anzeige. Dies kann beispielsweise geschehen, indem z. B. in ein Bild der Rückfahrkamera eine vom System ermittelte Zielparkposition eingeblendet wird.

Die Erfindung ist insbesondere in Verbindung mit einer Fahrassistenzvorrichtung zur Unterstützung eines Fahrers eines Fahrzeuges beim Einparken in eine Parklücke vorteilhaft anwendbar. Eine solche Fahrassistenzvorrichtung umfasst vorzugsweise:
- Mittel zur Vermessung einer Parklücke vor und während eines Einparkvorgangs,
- einen mit den Mitteln verbundenen Mikroprozessor mit zugehörigen Speichermitteln zur Berechnung und/oder Korrektur einer Einparktrajektorie anhand der aus der Vermessung der Parklücke vor und während des Einparkvorgangs ermittelten Parklückengeometrien und einer Fahrzeugposition relativ zu der Parklücke, wobei der Mikroprozessor mit zugehörigen Speichermitteln die während des Einparkvorgangs ermittelte Parklückengeometrie mit der vor Beginn des Einparkvorgangs ermittelten Parklückengeometrie vergleicht, und wenn sich die beiden Parklückengeometrien voneinander unterscheiden, eine vorliegende Abweichung bewertet und die Einparktrajektorie gegebenenfalls korrigiert und/oder neu berechnet, sowie
- Mittel zur Durchführung des Einparkvorgangs, während dem das Fahrzeug entlang der Einparktrajektorie in die Parklücke gesteuert wird.

Eine vorteilhafte Anwendung des erfindungsgemäßen Verfahrens ergibt sich in Verbindung mit einer Fahrassistenzvorrichtung, welche ein geführtes Einparken oder ein halbautomatisches Einparken, oder ein vollautomatisches Einparken eines Fahrzeugs entlang der Einparktrajektorie in die Parklücke ermöglicht.

Eine besonders vorteilhafte Ausgestaltung der Erfindung betrifft ein Computerprogrammprodukt gespeichert auf einem computerverwendbaren Medium, umfassend computerlesbare Programmmittel, welche bei Ausführung des Computerprogrammprodukts auf einem Mikroprozessor mit zugehörigen Speichermitteln oder auf einem Computer diesen zur Durchführung eines oben beschriebenen, erfindungsgemäßen Verfahrens veranlassen.

### Kurze Beschreibung der Zeichnung

Ausführungsbeispiele der Erfindung sind in den Figuren der Zeichnung dargestellt und werden nachfolgend näher erläutert. Es zeigen:
- Fig. 1: eine schematische Darstellung eines ersten Einparkvorgangs,
- Fig. 2: eine schematische Darstellung eines zweiten Einparkvorgangs
- Fig. 3: eine schematische Darstellung eines dritten Einparkvorgangs mit einer parallelen Abweichung eines realen seitlichen Objekts vom gemessenen Objekt und
- Figur 4: eine schematische Darstellung eines vierten Einparkvorgangs mit einem Richtungsversatz eines oder beider realen seitlichen Objekte.

### Ausführungsformen der Erfindung

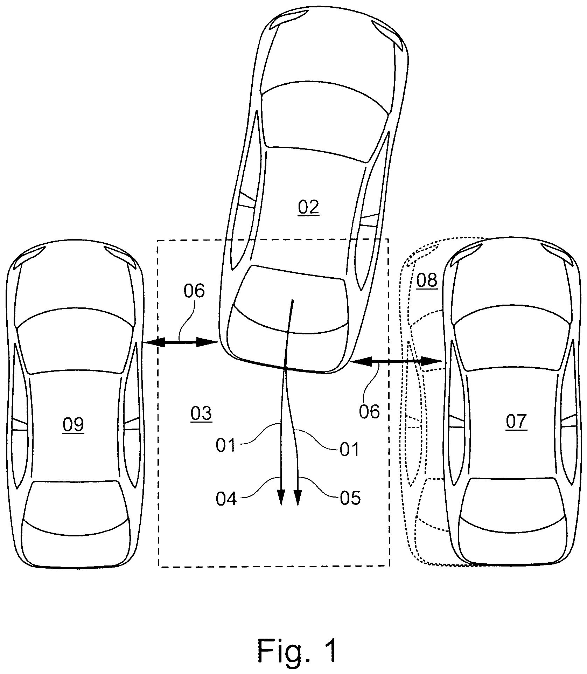

Ein erstes Ausführungsbeispiel eines erfindungsgemäßen Verfahrens ist nachfolgend anhand Fig. 1 erläutert. Fig. 1 zeigt eine erfindungsgemäße Korrektur einer Einparktrajektorie 01 und damit der lateralen Positionierung eines Fahrzeugs 02 in einer Parklücke 03 bei einer rechtwinkligen Parksituation anhand zusätzlicher seitlicher Ultraschallsensoren im Heckstoßfänger des Fahrzeugs 02.

Aufgrund eines Messfehlers bei der ursprünglichen Parklückenvermessung vor Beginn eines Einparkvorgangs hat sich eine Systemsicht ergeben, bei der sich ein die Parklücke 03 rechts begrenzendes Objekt 07, hier ein anderes parkendes Fahrzeug 07, nicht in seiner tatsächlichen Position, sondern in einer irrtümlichen Position 08 befindet. Anhand der aus der Vermessung der Parklücke 03 vor Beginn des Einparkvorgangs ermittelten, der Systemsicht entsprechenden irrtümlichen Parklückengeometrie und einer Fahrzeugposition relativ zu der Parklücke 03 wurde zunächst eine Einparktrajektorie 04 berechnet, bei der das Fahrzeug 02, wenn es entlang der Einparktrajektorie 04 in die Parklücke 03 gesteuert würde, aufgrund des Messfehlers nicht wie gewollt mittig, sondern außermittig in der Parklücke 03 positioniert werden würde.

Um dies zu korrigieren, wird wie in Fig. 1 dargestellt während des Eintauchens in die Parklücke 03 der seitliche Abstand 06 zu den Objekten 09, 07 links und rechts des Fahrzeugs 02 erfasst und mit den aufgrund der ursprünglich erfassten Geometrie und der aktuellen Fahrzeugposition erwarteten Abständen verglichen.

Der Versatz wird erkannt und die Einparktrajektorie 01 entsprechend korrigiert, sodass anstelle der auf dem Messfehler basierenden, die irrtümliche Systemsicht vor Beginn des Einparkvorgangs widerspiegelnden Einparktrajektorie 04 nunmehr die der tatsächlichen Situation angepasste Einparktrajektorie 05 vorliegt, entlang der das Fahrzeug 02 nunmehr in eine endgültige Zielposition in der Parklücke 03 verfahren wird.

Alternativ kann die Erfassung der seitlichen Abstände 06 während des Einparkvorgangs mittels für die Überwachung des Totwinkelbereichs vorhandener Radarsensoren geschehen. Dadurch fallen keine Mehrkosten für spezifische Sensoren bzw. für eine spezifische Sensorik an.

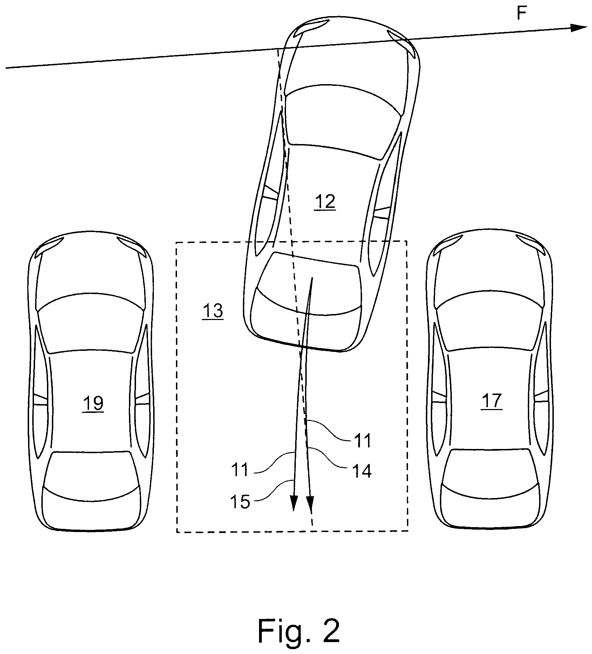

Ein zweites Ausführungsbeispiel eines erfindungsgemäßen Verfahrens ist nachfolgend anhand Fig. 2 erläutert. Fig. 2 zeigt eine erfindungsgemäße Korrektur einer Einparktrajektorie 11 und damit der Zielorientierung des Fahrzeugs 12 in einer Parklücke 13 bei einer nicht rechtwinkligen Parksituation anhand zusätzlicher seitlicher Ultraschallsensoren im Heckstoßfänger des Fahrzeugs 12.

Auch hier wird aufgrund einer Parklückenvermessung vor Beginn eines Einparkvorgangs zunächst eine Einparktrajektorie 14 berechnet, welche aufgrund einer unzureichenden Vermessung der Parklücke 13 aufgrund der nicht rechtwinkligen Parksituation zu einem unbefriedigenden Einparkergebnis führen würde.

Die Ermittlung der Zielorientierung des Fahrzeugs 12 in einer nicht rechtwinklig zu einem durch den Pfeil F schematisch dargestellten Fahrweg orientierten Parklücke 13 fällt schwer, da in der Regel beispielsweise durch Abschattung der die Parklücke seitlich begrenzenden Objekte 17, 19 keine ausreichenden Informationen aus der Ermittlung der Parklückengeometrie vorliegen. Typischerweise wird die Zielorientierung bislang rechtwinklig zum Fahrweg F des Fahrzeugs 12 bei der Vorbeifahrt an der Parklücke 13 festgelegt.

Während des Eintauchens in die Parklücke 13 wird deshalb erfindungsgemäß der Verlauf der Objekte 19, 17 links und rechts des Fahrzeugs 12 erfasst. Lässt sich anhand des Verlaufs erkennen, dass die Parklücke 13 eine von der ursprünglichen Festlegung abweichenden Orientierung bzw. Geometrie aufweist, wird die Einparktrajektorie 11 entsprechend korrigiert, sodass anstelle der ursprünglichen Einparktrajektorie 14 nunmehr eine an die tatsächliche Situation angepasste Einparktrajektorie 15 vorliegt, entlang der das Fahrzeug 12 in seine endgültige Zielposition in der Parklücke 13 verfahren wird.

Eine Möglichkeit die Orientierung der Parklücke 13 festzustellen kann dabei sein, den Verlauf beider seitlichen Objekte 17, 19 als Gerade darzustellen.

Falls beide Geraden annähernd parallel verlaufen, wird der Mittelwert beider Geraden als Orientierung der Parklücke 13 angenommen.

Falls beide Geraden nicht ausreichend parallel verlaufen, aber bezüglich der ursprünglichen Zielorientierung gleich orientiert sind, wird die Gerade, die am wenigsten von der ursprünglichen Zielorientierung abweicht als Orientierung der Parklücke 13 angenommen.

Falls beide Geraden nicht ausreichend parallel verlaufen und bezüglich der ursprünglichen Zielorientierung ungleich orientiert sind, kann entweder ein Mittelwert beider Geraden als Orientierung der Parklücke 13 angenommen werden, oder die ursprüngliche Zielorientierung beibehalten werden.

Ein wesentlicher Vorteil dieses zweiten Ausführungsbeispiels ist, dass dadurch nicht nur in nahezu rechtwinklig zur Fahrbahn bzw. zu einem Fahrweg F ausgerichtete Parklücken 13 eingeparkt werden kann, sondern auch in sogenannte Schrägparklücken.

Ein Ausführungsbeispiel eines erfindungsgemäßen Verfahrens sieht eine Korrektur der Einparktrajektorie anhand von durch eine Rückfahrkamera erkannten Parklückenmarkierungen vor.

Parklückenmarkierungen können von einer Rückfahrkamera erfasst, und mittels geeigneter Bildverarbeitung erkannt werden. Dabei werden Lage und Orientierung der Parklückenmarkierungen ermittelt.

Da diese Parklückenmarkierungen vor Beginn des Einparkvorganges in der Regel im Randbereich des Kamerabildes liegen, wird eine Ermittlung erst während des Einparkvorgangs sinnvoll, zumindest erhöht sich aber die Genauigkeit der Ermittlung, wenn die Parklückenmarkierung während des Einparkvorgangs in Richtung Bildmitte wandert. Dies gilt insbesondere für widrige Licht und/oder Kontrastverhältnisse.

Es ist auch vorstellbar, dass statt einer Parklückenmarkierung ein Bordsteinverlauf ermittelt wird.

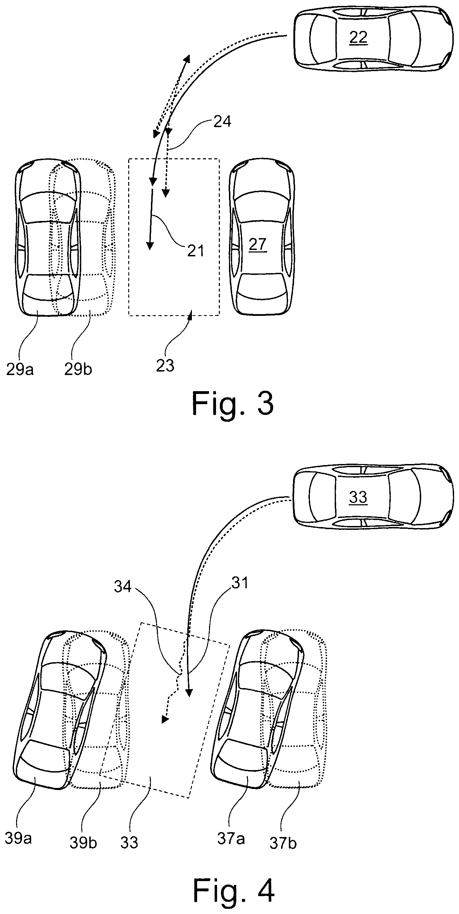

Ein drittes Ausführungsbeispiel eines erfindungsgemäßen Verfahrens wird nachfolgend anhand Fig. 3 erläutert. Diese Figur zeigt eine erfindungsgemäße Korrektur einer Einparktrajektorie 21 und damit zum Einfahren eines Fahrzeugs 22 in eine Parklücke 23 bei einer Parksituation, bei der die reale Position eines Fahrzeugs 29b von der gemessenen Position (Fahrzeug 29a) parallelverschoben abweicht. Durch eine Auswertung der Abstandsdaten von seitlich angebrachten Ultraschallsensoren im Heckstoßfänger des Fahrzeugs 22 kann hier eine Neuberechnung der zunächst aufgrund der Messwerte ermittelten Einparktrajektorie 21 hin zu der gestrichelt dargestellten neuen Einparktrajektorie 24 unter Berücksichtigung der während des Einparkens gemessenen seitlichen Abstandswerte zu der realen Position des Fahrzeugs 29b erfolgen.

Bei einem vierten Ausführungsbeispiel eines erfindungsgemäßen Verfahrens wird anhand Fig. 4 erläutert, wie im Fall eines Richtungsversatzes der zunächst gemessen Geraden eines Fahrzeugs 39b (bzw. Fahrzeug 37b) zu einem realen Fahrzeug 39a (bzw. Fahrzeug 37a) eine Korrektur des Zielwinkels der Einparktrajektorie 31 zu einer neuen gestrichelt dargestellten Einparktrajektorie 34 mit den Abstandswerten der seitlich am hinteren Stoßfänger angebrachten Ultraschallsensoren am einparkenden Fahrzeug 33 vorgenommen werden.

Zusammengefasst ist erfindungsgemäß vorgesehen, während des Einparkvorgangs die Geometrie der Parklücke durch eine geeignete Sensorik zu ermitteln und mit der vor Beginn des Einparkvorgangs ermittelten Geometrie zu vergleichen. Unterscheiden sich die beiden Geometrien voneinander, wird die vorliegende Abweichung bewertet. Hierdurch wird eine Korrektur der Einparktrajektorie während des Einparkvorganges anhand aktueller Sensordaten ermöglicht.

Sofern der Unterschied gering ist und z. B. in der jeweiligen systembedingten Streuung liegt, wird die ursprüngliche Geometrie beibehalten.

Sofern sich die während des Einparkvorgangs ermittelte Geometrie signifikant von der ursprünglichen Geometrie unterscheidet und dieser Unterschied für das Einparkergebnis relevant ist, wird die Einparktrajektorie anhand der aktuell ermittelten Geometrie neu festgelegt bzw. korrigiert.

Durch die Erfindung können Informationen, die erst während des Einparkvorgangs bzw. dann mit verbesserter Genauigkeit ermittelt werden, nutzbar gemacht werden und somit dazu beitragen, das Parkergebnis - insbesondere in schwierigen Situationen-zu verbessern und somit letztlich die Nutzbarkeit und Kundenzufriedenheit eines Einparksystems zu steigern.

Als Sensorik bieten sich neben den bereits im Fahrzeug verbauten Ultraschallsensoren auch eine vorhandene Kamera z. B. eine Rückfahrkamera oder Radarsensoren, z. B. eine Sensorik zur Überwachung des Totwinkelbereichs, an. Es ist auch denkbar eine speziell für die Neuermittlung der Parklückengeometrie während des Einparkvorgangs vorgesehene Sensorik zu verbauen, z. B. zusätzliche seitliche Ultraschallsensoren im hinteren Fahrzeugbereich.

Grundsätzlich ist denkbar, zusätzlich zu den genannten Maßnahmen eine Verifikation und Bestätigung bzw. Korrektur der Zielparkposition und/oder -orientierung in der Parklücke durch den Fahrer vornehmen zu lassen, beispielsweise mittels einer Darstellung der Parksituation auf einer Anzeige. Dies kann beispielsweise geschehen, indem z. B. in ein Bild der Rückfahrkamera eine vom System ermittelte Zielparkposition eingeblendet wird.

## Patentansprüche

1. Verfahren zur Unterstützung eines Fahrers eines Fahrzeugs (02, 12) beim Einparken in eine nahezu rechtwinklig zu einer Fahrbahn ausgerichtete Parklücke (03,13) oder eine Schrägparklücke, bei welchem Verfahren
- eine mögliche Parklücke (03, 13) vermessen wird,
- eine Einparktrajektorie (04, 14) anhand der aus der Vermessung der Parklücke (03, 13) ermittelten Parklückengeometrie und einer Fahrzeugposition relativ zu der Parklücke (03, 13) berechnet wird, und
- anschließend ein Einparkvorgang durchgeführt wird, während dem das Fahrzeug entlang der Einparktrajektorie (01, 11) in die Parklücke (03, 13) gesteuert wird,
**dadurch gekennzeichnet, dass** die Parklückengeometrie während des Einparkvorgangs weiterhin ermittelt und mit der vor Beginn des Einparkvorgangs ermittelten Parklückengeometrie verglichen wird, wobei der Vergleich der vor und während des Einparkvorgangs ermittelten Parklückengeometrien erfolgt, indem während des Eintauchens in die Parklücke (03) der seitliche Abstand (06) zu die Parklücke (03) begrenzenden Objekten (09, 07) links und rechts des Fahrzeugs (02) erfasst und mit den aufgrund der ursprünglich erfassten Parklückengeometrie und der aktuellen Fahrzeugposition erwarteten Abständen verglichen wird,
und wobei wenn sich die beiden Parklückengeometrien voneinander unterscheiden, eine vorliegende Abweichung bewertet und die Einparktrajektorie (01, 11; 05, 15) gegebenenfalls korrigiert und/oder neu berechnet wird.

2. Verfahren nach Anspruch 1, **dadurch gekennzeichnet, dass** sofern der Unterschied der vor und während des Einparkvorgangs ermittelten Parklückengeometrien gering ist, die ursprüngliche Einparktrajektorie (04, 14) beibehalten wird, und sofern sich die während des Einparkvorgangs ermittelte Parklückengeometrie signifikant von der ursprünglich ermittelten Parklückengeometrie unterscheidet und dieser Unterschied für das Einparkergebnis relevant ist, die Einparktrajektorie (05, 15) anhand der aktuell während des Einparkvorgangs ermittelten Parklückengeometrie neu festgelegt bzw. korrigiert wird.

3. Verfahren nach Anspruch 1 oder 2, **dadurch gekennzeichnet, dass** während des Einparkvorgangs die Distanz zu die Parklücke begrenzenden Objekten (07, 09; 17, 19) überwacht wird.

4. Verfahren nach einem der Ansprüche 1, 2 oder 3, **dadurch gekennzeichnet, dass** ein Vergleich der vor und während des Einparkvorgangs ermittelten Parklückengeometrien erfolgt, indem während des Eintauchens in die Parklücke (13) der Verlauf von die Parklücke (13) begrenzenden Objekten (19, 17) links und rechts des Fahrzeugs (12) erfasst wird, wobei wenn sich anhand des Verlaufs erkennen lässt, dass die Parklücke (13) eine von der vor dem Einparkvorgang ermittelten Parklückengeometrie abweichende Orientierung aufweist, die Einparktrajektorie (11, 15) entsprechend korrigiert wird.

5. Verfahren nach Anspruch 4, **dadurch gekennzeichnet, dass** zur Feststellung der Orientierung der Parklücke (13) der Verlauf beider seitlichen Objekte (17, 19) jeweils als eine Gerade dargestellt wird.

6. Verfahren nach Anspruch 5, **dadurch gekennzeichnet, dass** falls beide Geraden annähernd parallel verlaufen, der Mittelwert beider Geraden als Orientierung der Parklücke (13) angenommen wird.

7. Verfahren nach Anspruch 5, **dadurch gekennzeichnet, dass**, falls beide Geraden nicht ausreichend parallel verlaufen aber bezüglich der ursprünglichen Zielorientierung gleich orientiert sind, die Gerade, die am wenigsten von der ursprünglichen Zielorientierung abweicht als Orientierung der Parklücke (13) angenommen wird.

8. Verfahren nach Anspruch 5, **dadurch gekennzeichnet, dass** bei einer Abweichung des Verlaufs der gemessenen Geraden von der realen Geraden während des Einparkvorgangs seitliche Abstandsdaten zur Korrektur der Einparktrajektorie (21,24;31,34) herangezogen werden.

9. Verfahren nach Anspruch 8, **dadurch gekennzeichnet, dass** für den Fall einer Parallelverschiebung der Geraden eine Korrektur der Einparktrajektorie (21,24) im wesentlichen durch eine korrespondierende Parallelverschiebung vorgenommen wird.

10. Verfahren nach Anspruch 8, **dadurch gekennzeichnet, dass** für den Fall eines Richtungsversatzes der Geraden eine Korrektur des Zielwinkels der Einparktrajektorie (31,34) vorgenommen wird.

11. Verfahren nach Anspruch 5, **dadurch gekennzeichnet, dass** falls beide Geraden nicht ausreichend parallel verlaufen und bezüglich der ursprünglichen Zielorientierung ungleich orientiert sind, ein Mittelwert beider Geraden als Orientierung der Parklücke (13) angenommen wird.

12. Verfahren nach Anspruch 5, **dadurch gekennzeichnet, dass** falls beide Geraden nicht ausreichend parallel verlaufen und bezüglich der ursprünglichen Zielorientierung ungleich orientiert sind, die ursprüngliche Zielorientierung beibehalten wird.

13. Verfahren nach einem der vorhergehenden Ansprüche, **dadurch gekennzeichnet, dass** zur Ermittlung der Parklückengeometrie während des Einparkvorgangs eine Vermessungseinrichtung vorgesehen ist, welche primär zur Unterstützung des Fahrers des Fahrzeugs (02, 12) in einer anderen Situation, als während eines Einparkvorgangs vorgesehen ist.

14. Verfahren nach einem der Ansprüche 1 bis 13, **dadurch gekennzeichnet, dass** zur Ermittlung der Parklückengeometrie während des Einparkvorgangs eine Vermessungseinrichtung vorgesehen ist, die eigens zur Unterstützung des Fahrers des Fahrzeugs (02, 12) während eines Einparkvorgangs vorgesehen ist.

15. Verfahren nach Anspruch 13 oder 14, **dadurch gekennzeichnet, dass** die Vermessungseinrichtung Ultraschallsensoren umfasst.

16. Verfahren nach einem der Ansprüche 13 bis 15, **dadurch gekennzeichnet, dass** die Vermessungseinrichtung eine Kamera umfasst.

17. Verfahren nach einem der Ansprüche 13 bis 16, **dadurch gekennzeichnet, dass** die Vermessungseinrichtung Radarsensoren umfasst.

## Claims

1. Method for assisting a driver of a vehicle (02, 12) when parking in a parking space (03, 13) which is oriented virtually at a right angle to a carriageway or an oblique parking space, in which method
- a possible parking space (03, 13) is measured,
- a parking trajectory (04, 14) is calculated on the basis of the parking space geometry which is determined from the measurement of the parking space (03, 13), and on the basis of a vehicle position relative to the parking space (03, 13), and
- a parking process is subsequently carried out during which the vehicle is steered along the parking trajectory (01, 11) into the parking space (03, 13),
**characterized in that** the parking space geometry continues to be determined during the parking process and is compared with the parking space geometry determined before the start of the parking process,
wherein the comparison between the parking space geometry determined before the parking process and that determined during the parking process is carried out by sensing, during the entry into the parking space (03), the lateral distance (06), to the left and right of the vehicle (02), from objects (09, 07) which bound the parking space (03) and by comparing said lateral distance (06) with the distances which are expected on the basis of the originally sensed parking space geometry and the current vehicle position,
and wherein, if the two parking space geometries differ from one another, a deviation which is present is evaluated and the parking trajectory (01, 11; 05, 15) is, if appropriate, corrected and/or re-calculated.

2. Method according to Claim 1, **characterized in that** if the difference between the parking space geometry determined before the parking process and that determined during the parking process is small, the original parking trajectory (04, 14) is retained, and if the parking space geometry determined during the parking process differs significantly from the originally determined parking space geometry and this difference is relevant for the parking result, the parking trajectory (05, 15) is re-defined or corrected on the basis of the parking space geometry currently determined during the parking process.

3. Method according to Claim 1 or 2, **characterized in that** the distance from objects (07, 09; 17, 19) which bound the parking space is monitored during the parking process.

4. Method according to one of Claims 1, 2 or 3, **characterized in that** a comparison between the parking space geometry determined before the parking process and that determined during the parking process is carried out by sensing, during the entry into the parking space (13), the profile, to the left and right of the vehicle (12), of objects (19, 17) which bound the parking space (13), wherein, if it can be detected on the basis of the profile that the parking space (13) has an orientation which differs from the parking space geometry determined before the parking process, the parking trajectory (11, 15) is correspondingly corrected.

5. Method according to Claim 4, **characterized in that**, in order to detect the orientation of the parking space (13), the profile of the two lateral objects (17, 19) is represented in each case as a straight line.

6. Method according to Claim 5, **characterized in that** if both straight lines extend approximately in parallel, the mean value of the two straight lines is adopted as the orientation of the parking space (13).

7. Method according to Claim 5, **characterized in that** if both straight lines do not extend sufficiently in parallel but have the same orientation with respect to the original target orientation, the straight line which differs the least from the original target orientation is adopted as the orientation of the parking space (13) .

8. Method according to Claim 5, **characterized in that** in the event of a deviation of the profile of the measured straight lines from the real straight lines, lateral distance data are used to correct the parking trajectory (21, 24; 31, 34) during the parking process.

9. Method according to Claim 8, **characterized in that** in the event of parallel displacement of the straight lines, the parking trajectory (21, 24) is corrected essentially by corresponding parallel displacement.

10. Method according to Claim 8, **characterized in that** in the event of a directional offset of the straight lines, the target angle of the parking trajectory (31, 34) is corrected.

11. Method according to Claim 5, **characterized in that** if both straight lines do not extend sufficiently in parallel and are oriented differently with respect to the original target orientation, a mean value of the two straight lines is adopted as the orientation of the parking space (13).

12. Method according to Claim 5, **characterized in that** if both straight lines do not extend sufficiently in parallel and are oriented differently with respect to the original target orientation, the original target orientation is retained.

13. Method according to one of the preceding claims, **characterized in that**, in order to determine the parking space geometry during the parking process, a measuring device is provided which is primarily provided for assisting the driver of the vehicle (02, 12) in a situation other than that during a parking process.

14. Method according to one of Claims 1 to 13, **characterized in that**, in order to determine the parking space geometry during the parking process, a measuring device is provided which is provided specially for assisting the driver of the vehicle (02, 12) during a parking process.

15. Method according to Claim 13 or 14, **characterized in that** the measuring device comprises ultrasonic sound sensors.

16. Method according to one of Claims 13 to 15, **characterized in that** the measuring device comprises a camera.

17. Method according to one of Claims 13 to 16, **characterized in that** the measuring device comprises radar sensors.

## Revendications

1. Procédé pour assister un conducteur d'un véhicule (02, 12) lors d'une entrée en stationnement dans une place de stationnement (03, 13) orientée presque perpendiculairement à une voie de circulation ou une place de stationnement en biais, procédé selon lequel
- une place de stationnement (03, 13) possible est mesurée,
- une trajectoire d'entrée en stationnement (04, 14) est calculée à l'aide de la géométrie de place de stationnement déterminée à partir du mesurage de la place de stationnement (03, 13) et une position du véhicule par rapport à la place de stationnement (03, 13) est calculée, et
- une manoeuvre d'entrée en stationnement est ensuite effectuée, pendant laquelle le véhicule est commandé le long de la trajectoire d'entrée en stationnement (01, 11) dans la place de stationnement (03, 13),
**caractérisé en ce que** la géométrie de place de stationnement continue d'être déterminée pendant la manoeuvre d'entrée en stationnement et comparée avec la géométrie de place de stationnement déterminée avant le début de la manoeuvre d'entrée en stationnement en détectant, pendant l'immersion dans la place de stationnement (03), l'écart latéral (06) par rapport aux objets (09, 07) qui délimitent la place de stationnement (03) à gauche et à droite du véhicule (02) et en le comparant aux écarts attendus sur la base de la géométrie de place de stationnement détectée initialement et la position actuelle du véhicule,
et lorsque les deux géométries de place de stationnement sont différentes l'une de l'autre, évalue une déviation présente et la trajectoire d'entrée en stationnement (01, 11 ; 05, 15) étant éventuellement corrigée et/ou recalculée.

2. Procédé selon la revendication 1, **caractérisé en ce que** dans la mesure où la différence entre les géométries de place de stationnement déterminées avant et pendant la manoeuvre d'entrée en stationnement est faible, la trajectoire d'entrée en stationnement (04, 14) initiale est conservée, et dans la mesure où la géométrie de place de stationnement déterminée pendant la manoeuvre d'entrée en stationnement se différencie nettement de la géométrie de place de stationnement déterminée initialement et que cette différence est pertinente pour le résultat de l'entrée en stationnement, la trajectoire d'entrée en stationnement (05, 15) est redéfinie ou corrigée à l'aide de la géométrie de place de stationnement actuelle déterminée pendant la manoeuvre d'entrée en stationnement.

3. Procédé selon la revendication 1 ou 2, **caractérisé en ce que** la distance par rapport aux objets (07, 09 ; 17, 19) qui délimitent la place de stationnement est surveillée pendant la manoeuvre d'entrée en stationnement.

4. Procédé selon l'une des revendications 1, 2 ou 3, **caractérisé en ce qu'**une comparaison des géométries de place de stationnement déterminées avant et pendant la manoeuvre d'entrée en stationnement est effectuée en détectant le tracé des objets (17, 19) qui délimitent la place de stationnement (13) à gauche et à droite du véhicule (12) pendant l'immersion dans la place de stationnement (13), la trajectoire d'entrée en stationnement (11, 15) étant corrigée en conséquence lorsque le tracé amène à constater que la place de stationnement (13) présente une orientation qui dévie de la géométrie de place de stationnement déterminée avant la manoeuvre d'entrée en stationnement.

5. Procédé selon la revendication 4, **caractérisé en ce que** pour définir l'orientation de la place de stationnement (13), le tracé des deux objets (17, 19) latéraux est respectivement représenté sous la forme d'une droite.

6. Procédé selon la revendication 5, **caractérisé en ce que** dans le cas où les deux droites s'étendent approximativement en parallèle, la valeur moyenne des deux droites est adoptée comme orientation de la place de stationnement (13).

7. Procédé selon la revendication 5, **caractérisé en ce que** dans le cas où les deux droites ne s'étendent pas suffisamment en parallèle, mais sont orientées à l'identique par rapport à l'orientation cible initiale, la droite qui dévie le moins de l'orientation cible initiale est adoptée comme orientation de la place de stationnement (13).

8. Procédé selon la revendication 5, **caractérisé en ce qu'**en présence d'une déviation du tracé des droites mesurées par rapport aux droites réelles pendant la manoeuvre d'entrée en stationnement, les données d'écart latéral sont utilisées pour la correction de la trajectoire d'entrée en stationnement (21, 24 ; 31, 34).

9. Procédé selon la revendication 8, **caractérisé en ce que** dans le cas d'un décalage parallèle des droites, une correction de la trajectoire d'entrée en stationnement (21, 24) est effectuée sensiblement par un décalage parallèle correspondant.

10. Procédé selon la revendication 8, **caractérisé en ce que** dans le cas d'une variation de direction des droites, une correction de l'angle cible de la trajectoire d'entrée en stationnement (31, 34) est effectuée.

11. Procédé selon la revendication 5, **caractérisé en ce que** dans le cas où les deux droites ne s'étendent pas suffisamment en parallèle et sont orientées différemment par rapport à l'orientation cible initiale, une valeur moyenne des deux droites est adoptée comme orientation de la place de stationnement (13) .

12. Procédé selon la revendication 5, **caractérisé en ce que** dans le cas où les deux droites ne s'étendent pas suffisamment en parallèle et sont orientées différemment par rapport à l'orientation cible initiale, l'orientation cible initiale est conservée.

13. Procédé selon l'une des revendications précédentes, **caractérisé en ce qu'**un dispositif de mesurage est présent pour la détermination de la géométrie de place de stationnement pendant la manoeuvre d'entrée en stationnement, lequel est principalement destiné à assister le conducteur du véhicule (02, 12) dans une autre situation que pendant une manoeuvre d'entrée en stationnement.

14. Procédé selon l'une des revendications 1 à 13, **caractérisé en ce qu'**un dispositif de mesurage est présent pour la détermination de la géométrie de place de stationnement pendant la manoeuvre d'entrée en stationnement, lequel est spécifiquement destiné à assister le conducteur du véhicule (02, 12) pendant une manoeuvre d'entrée en stationnement.

15. Procédé selon la revendication 13 ou 14, **caractérisé en ce que** le dispositif de mesurage comprend des capteurs à ultrasons.

16. Procédé selon l'une des revendications 13 à 15, **caractérisé en ce que** le dispositif de mesurage comprend une caméra.

17. Procédé selon l'une des revendications 13 à 15, **caractérisé en ce que** le dispositif de mesurage comprend des capteurs radar.
